# EUROPEAN PATENT APPLICATION

(11) **EP 2 271 094 A2**
(43) Date of publication of application: **05.01.2011**
(21) Application number: 10165501.7
(22) Date of filing: 10.06.2010
(51) Int. Cl.: H04N 7/173

(54) **Media distribution switching method, receiving device and transmitting device**

(30) Priority: 30.06.2009 JP 2009155503
(71) Applicant: FUJITSU LIMITED, Kawasaki-shi, Kanagawa 211-8588 (JP)
(72) Inventor: Yoshida, Kaname, Kanagawa 211-8588 (JP)
(74) Representative: Stebbing, Timothy Charles

(57) **Abstract**

A request packet generation unit 101 generates a request packet for requesting the distribution of media information. A request packet transmitting unit 102 transmits the request packet. A request response packet receiving unit 103 receives a request response packet corresponding to the request packet from a transmitting device. A request response analysis unit 104 analyzes a request response set in the request response packet. A mode determination unit 105 switches between an operation mode for real-time transmission and that for non-real-time transmission according to device type information, attached to the request response, indicating whether the transmitting device is for real-time transmission or non-real-time transmission. A first receiving unit composed of reference numerals 109 through 113, 115 and 116 receives media information in an operation mode for real-time transmission. A second receiving unit composed of reference numerals 109 through 113, 115, 116 and 106 through 108 receives media information in an operation mode for non-real-time transmission.

## Description

The present invention relates to a transmission technology in the case where real-time transmission and non-real-time transmission are mixed in the transmission of media information on a packet network

When a transmitting device and a receiving device communicate media information such as images (e.g. video), voices and the like with each other on a packet network such as an IP (Internet protocol) network or the like, sometimes real-time transmission and non-real-time transmission are mixed.

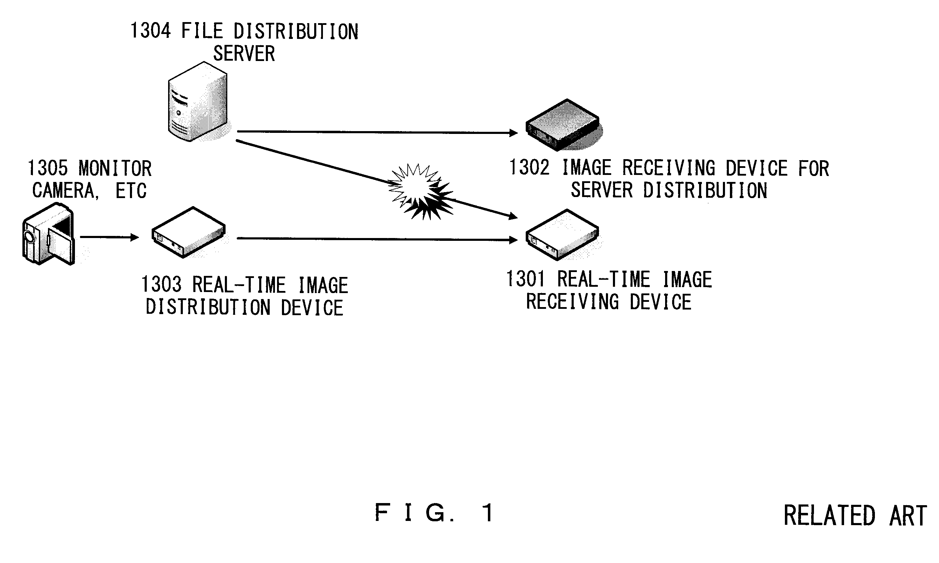

In real-time transmission, for example, as illustrated in FIG. 1, image signals (video pictures) obtained by a monitor camera 1305 are encoded by a real-time image distribution device 1303, are transmitted to a real-time image receiving device 1301 (such as a video player, media player, set-top box or television) as a real-time motion image packet, and are decoded/reproduced. In order to synchronize the clock of image signals to be decoded/reproduced by the real-time image receiving device 1301 with a clock at the time of encoding in the real-time image distribution device 1303, for example, a method using PCR (program clock reference) is adopted. In this method, a clock synchronization packet called PCR is multiplexed on a motion image packet to be transmitted. On the decoding side, a difference between the received PCR data and a system time clock (STC) at the time of reception on the decoding side is calculated. Then, a voltage-controlled crystal oscillator (VCXO) is controlled by this differential value and a reproduction clock is generated. Specifically, in the real-time transmission, the size of a packet receiving buffer on the real-time image receiving device 1301 side is reduced as much as possible by synchronizing the clocks of the real-time image distribution device 1303 (encoder) and the real-time image receiving device 1301 (decoder) and the delay in reproducing images can be avoided as much as possible.

However, in non-real-time transmission, as illustrated in FIG. 1, an encoded image signal file accumulated in the storage device of a file distribution server 1304 is read and transmitted using a packet in response to a request from a server distribution image receiving device 1302. The server distribution image receiving device 1302 decodes/reproduces the image signal file transmitted using a packet on the basis of a system clock in its own device. In non-real-time transmission, it is technically difficult to transmit an image signal file at the same timing as that at the time of encoding. Therefore, the server distribution image receiving device 1302 exercises flow control in order to absorb a difference between reproduction timing and transmission timing. In the flow control, when a packet remaining in the packet receiving buffer seems to exceed the buffer size, a transmit stop request packet is transmitted from the server distribution image receiving device 1302 to the file distribution server 1304 and the file distribution server 1304 stops the transmission of an image signal file. Conversely, when no packet seems to be remaining in the packet receiving buffer, a transmit start request packet is transmitted from the server distribution image receiving device 1302 to the file distribution server 1304 and the file distribution server 1304 starts (re-starts) the transmission of an image signal file (video file).

In this case, although the real-time image receiving device 1301 illustrated in FIG. 1 usually receives image signals transmitted from the real-time image distribution device 1303 in real time, there has been a desire for the real-time image receiving device 1301 to also be able to receive image signals transmitted from the real-time image distribution device 1303 not in real time.

In order to realize such mixed reception, it is necessary for the real-time image receiving device 1301 to have a flow control function for non-real-time transmission.

However, when the real-time image receiving device 1301 attempts to receive an image signal file transmitted from the real-time image distribution device 1303 not in real time, there is no prior art capable of discriminating real-time transmission from non-real-time transmission. Therefore, conventionally a flow control function cannot be mounted on the real-time image receiving device 1301.

Therefore, when the real-time image receiving device 1301 receives an image signal file transmitted from the real-time image distribution device 1303 not in real time without flow control, as illustrated in FIG. 1, there is a high possibility that the difference between reproduction timing and transmission timing may increase. As a result, an overflow or underflow of packets occurs in the packet receiving buffer of the real-time image receiving device 1301 and the image signal file cannot be normally received, which is a problem.

Accordingly, it is desirable to discriminate media information by real-time transmission from that by non-real-time transmission and to receive it.
One aspect of the invention can be realized as a media distribution switching method for switching media distributed from a transmitting device to a receiving device on a packet network and has the following configuration.

Firstly, a request packet for requesting the distribution of media information from a receiving device to a transmitting device is transmitted.
Then, a request response packet to which is attached device type information indicating whether the transmitting device is for real-time or non-real-time transmission is returned from the transmitting device to the receiving device in response to the request packet.

Then, in the receiving device, an operation mode for real-time transmission and that for non-real-time transmission are switched on the basis of the device type information attached to the request response packet received from the transmitting device, and a receiving operation is performed.

In an environment where a transmitting device for real-time transmission and one for non-real-time transmission are mixed, there is no need to prepare receiving devices dedicated to respective transmitting devices and costs can be reduced.
It thus becomes possible to realize a receiving device capable of seamlessly receiving media information without being aware of its distribution source.
Reference is made, by way of example only, to the accompanying drawings in which:

FIG. 1 explains the prior art.
FIG. 2 is a configuration of the first preferred embodiment of a receiving device.
FIG. 3 is a configuration of the first preferred embodiment of a transmitting device.
FIG. 4 is an operational flowchart illustrating the control operation of the first preferred embodiment of a receiving device.
FIG. 5 is an operational flowchart illustrating the control operation of the first preferred embodiment of a transmitting device.
FIG. 6 is a data structure example of the request packet of the first preferred embodiment of receiving and transmitting devices.
FIG. 7 is a data structure example of the request response packet of the first preferred embodiment of receiving and transmitting devices.
FIGs. 8A and 8B are the operational sequence charts of the first preferred embodiment of receiving and transmitting devices.
FIG. 9 is a configuration of the second preferred embodiment of a transmitting device.
FIG. 10 is an operational flowchart illustrating the control operation of the second preferred embodiment of a receiving device.
FIG. 11 is an operational flowchart illustrating the control operation of the second preferred embodiment of a transmitting device.
FIG. 12 is a data structure example of the request packet of the second preferred embodiment of receiving and transmitting devices.
FIGs. 13A and 13B are the operational sequence charts of the second preferred embodiment of receiving and transmitting devices.

Preferred embodiments of the present invention will be explained in detail with reference to accompanying drawings.

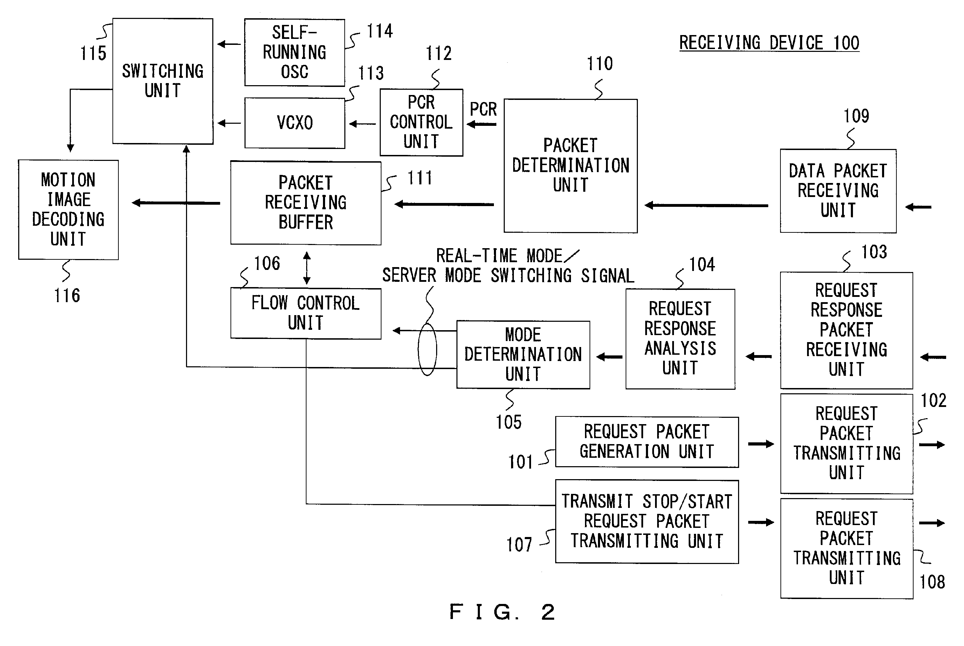

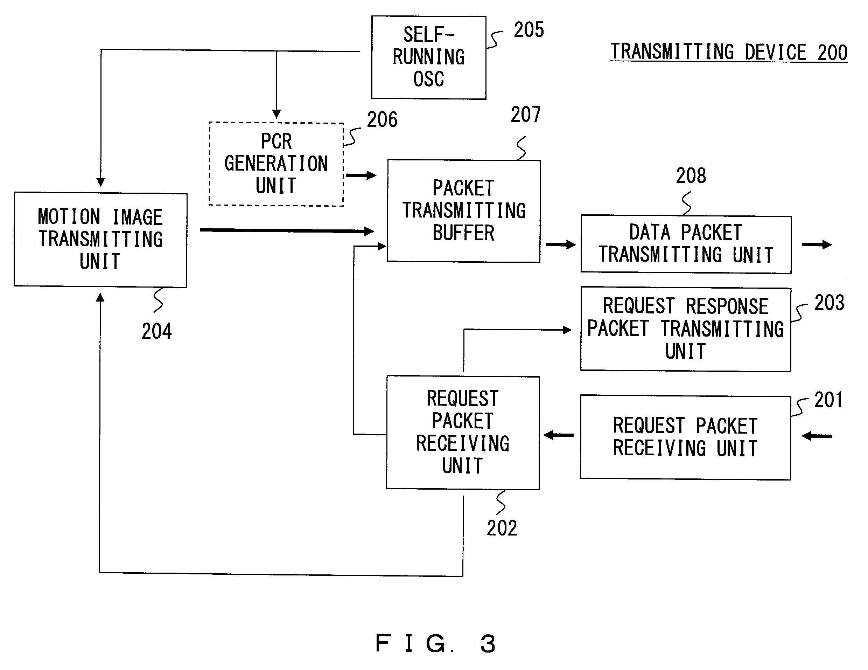

FIG. 2 is a configuration of the receiving device 100 in the first preferred embodiment, for discriminating image signals by real-time transmission from image files by non-real-time transmission and receiving them on an asynchronous and quality-not-insured packet network. FIG. 3 is a configuration of a transmitting device 200 in the first preferred embodiment. The receiving device 100 and the transmitting device 200 correspond to the real-time image receiving device 1301, and the real-time image distribution device 1303 or the file distribution server 1304, respectively, that are illustrated in FIG. 1.

In the receiving device 100 illustrated in FIG. 1, a request packet generation unit 101 generates a request packet for instructing the transmitting device 200 to start or stop distributing image signals or image files. A request packet transmitting unit 102 transmits the request packet generated by the request packet generation unit 101 to the transmitting device 200 on a network, which is not illustrated.

A request response packet receiving unit 103 receives a request response packet in response to the request packet transmitted by its own device from the network. A request response analysis unit 104 analyzes the contents of a request response, which are given in the request response packet received by the request response packet receiving unit 103. A mode determination unit 105 determines which is specified as a device type in the request response, a real-time encoder or a distribution server. If a real-time encoder is specified in the request response, the mode determination unit 105 notifies a flow control unit 106 and a switching unit 115 of a real-time mode. If a distribution server is specified in the request response, the mode determination unit 105 notifies a flow control unit 106 and a switching unit 115 of a server mode.

A data packet receiving unit 109 receives a data packet transmitted from the transmitting device 200 via the network.
A packet determination unit 110 determines whether the data packet stores PCR or image information other than PCR. When operating in a real-time mode, the packet determination unit 110 detects a data packet storing PCR or a data packet storing image signals transmitted from the transmitting device 200, which is the real-time image distribution device. The packet determination unit 110 writes the data packet storing image signals in a packet receiving buffer 111 and transfers the data packet storing PCR data to a PCR control unit 112.

The PCR control unit 112 extracts PCR data from the packet transferred from the packet determination unit 110 and calculates a differential value between each piece of PCR data and a system time clock (STC) in its own device. Then, the PCR control unit 112 generates a voltage control signal corresponding to the differential value and supplies it to a VCXO (voltage control Xtal oscillator).

In the real-time mode, the mode determination unit 105 enables the switching unit 115 to select the output of the VCXO 113. Thus, in the real-time mode, a clock voltage-controlled on the basis of the PCR oscillated from the VCXO 113 is supplied to a motion image decoding unit 116.

Thus, in the real-time mode, the motion image decoding unit 116 can decode/reproduce the image signal packet received by the packet receiving buffer 111 by a clock synchronized with the clock at the time of encoding. In other words, in the real-time mode, the data packet receiving unit 109, the packet determination unit 110, the packet receiving buffer 111, the motion image decoding unit 116, a PCR generation unit 206, the VCXO 113, and the switching unit 115 constitute a first receiving unit for receiving media information in an operation mode for making a real-time transmission.

In the real-time mode, since synchronous reproduction is possible as described above, it is not necessary to exercise flow control according to the state of the packet receiving buffer 111. Therefore, in the real-time mode, the flow control unit 106 is prevented from operating by the mode determination unit 105 notifying the flow control unit 106 of a real-time mode.

However, when operating in a server mode, since a packet storing PCR data is neglected and discarded, only a data packet is written in the packet receiving buffer 111. This data packet stores the image file transmitted from the transmitting device 200, which is a file distribution server.

In a server mode, the mode determination unit 105 enables the switching unit 115 to select the output of a self-running OSC 114. The self-running OSC (oscillator) 114 oscillates a system time clock regardless of timing on the transmitting side. Thus, in a server mode, the system time clock oscillated from the self-OSC 114 is supplied to the motion image decoding unit 116.

As a result, in a server mode, the motion image decoding unit 116 decodes/reproduces the image file received by the packet receiving buffer 111 on the basis of the system time clock oscillated by the self-running OSC 114 at a timing independent of the transmitting device 200.

In this case, in a server mode, the mode determination unit 105 notifies the flow control unit 106 of a server mode. As a result, since the flow control unit 106 absorbs the difference between reproduction timing and transmission timing, it exercises flow control.

Specifically, when packets remaining in the packet receiving buffer 111 seem to exceed the buffer size in a server mode, the flow control unit 106 issues a first instruction to a transmit stop/start request packet transmitting unit 107. As a result, the transmit stop/start request packet transmitting unit 107 generates a transmit stop request packet for the transmitting device 200 in communication and transmits this packet to the network via a request packet transmitting unit 108. As a result, the transmitting device 200 starts (re-starts) the transmission of the data packet storing the image file and the amount of packets received by the receiving device 100 is adjusted.

In this case, in a server mode, since the difference between reproduction timing and transmission timing tends to increase, it can also be controlled in such a way that the capacity of the packet receiving buffer 111 may be increased.

Thus, in a server mode, the data packet receiving unit 109, the packet determination unit 110, the packet receiving buffer 111, the motion image decoding unit 116, the PCR generation unit 206, the self-running OSC 114, the switching unit 115, the flow control unit 106, the transmit stop/start request packet transmitting unit 107, and the request packet transmitting unit 108 form a second receiving unit for receiving media information in an operation mode for a non-real-time transmission.

Then, in the transmitting device 200 illustrated in FIG. 3, a request packet receiving unit 201 receives the request packet transmitted by the receiving device 100 (FIG. 2) via the network.

A request packet analysis unit 202 analyzes the received request packet.
When the request packet requests the start or stoppage of the distribution of an image signal or an image file as an analysis result, the request packet analysis unit 202 instructs a request response packet transmitting unit 203 to transmit a request response packet. The request response packet transmitting unit 203 transmits a request response packet to the receiving device 100 (FIG. 2) that has transmitted the above request packet. At this moment, if the request response packet transmitting unit's 203 own device is a real-time image distribution device, it attaches device type information indicating that it is a real-time encoder. Conversely, if its own device is a file distribution server, the request response packet transmitting unit 203 attaches device type information indicating that it is a file distribution server.

When the request packet requests the start or stoppage of the distribution of an image signal or an image file as an analysis result, the request packet analysis unit 202 also instructs the motion image transmitting unit 204 to start or stop the distribution of an image signal or an image file.
A self-running OSC 205 oscillates a system time clock.
If the motion image transmitting unit's 204 own device is a real-time image distribution device, it encodes image signals in real time and generates image signal packets, on the basis of a clock generated by the self-running OSC 205, and sequentially writes them in a packet transmitting buffer 207 until the distribution stops after it starts. If the motion image transmitting unit's 204 own device is a file distribution server, it reads image files from a storage device, which is not illustrated, generates image file packets, and sequentially writes them in the packet transmitting buffer 207 until the distribution stops after it starts.

Furthermore, if the PCR generation unit's 206 own device is a real-time image distribution device, it performs the following operations until the distribution stops after it starts. Specifically, the PCR generation unit 206 generates a packet storing PCR data corresponding to the clock of an image signal distributed in real time by the motion image transmitting unit 204, on the basis of a clock generated by the self-running OSC 205. Then, the PCR generation unit 206 writes the packet in the packet transmitting buffer 207.

If the PCR generation unit's 206 own device is a file distribution server, the PCR generation unit 206 is not installed.
The packet transmitting buffer 207 sequentially transfers the written data packets to a data packet transmitting unit 208. The data packet transmitting unit 208 transmits the data packets to the network toward the receiving device 100 (FIG. 2).

In this case, if the request packet is a transmit stop request packet resulting from the analysis when the request packet analysis unit's 202 own device is a file distribution server, the request packet analysis unit 202 instructs the packet transmitting buffer 207 to start (re-start) the transmission of data packets. Thus, flow control is exercised.

The operation of the first preferred embodiment, having the above configuration of the receiving and transmitting devices, will be explained in detail below.

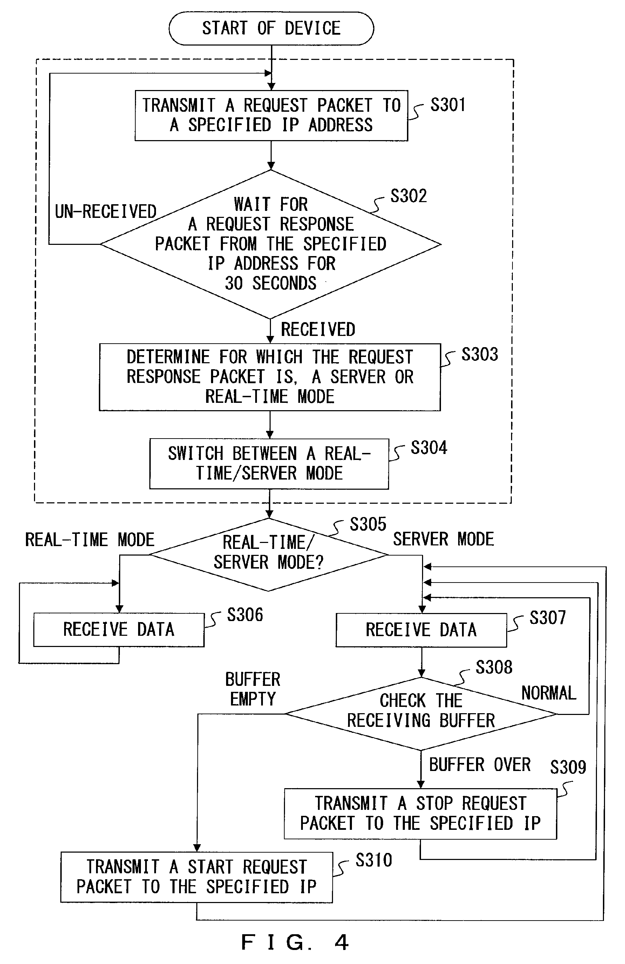

FIG. 4 is an operational flowchart illustrating the control operation of the receiving device 100 illustrated in FIG. 2. The control operation of this flowchart can be realized as an operation for a processor, which is not illustrated, in the receiving device 100 so as to execute a control program stored in memory, which is not illustrated.

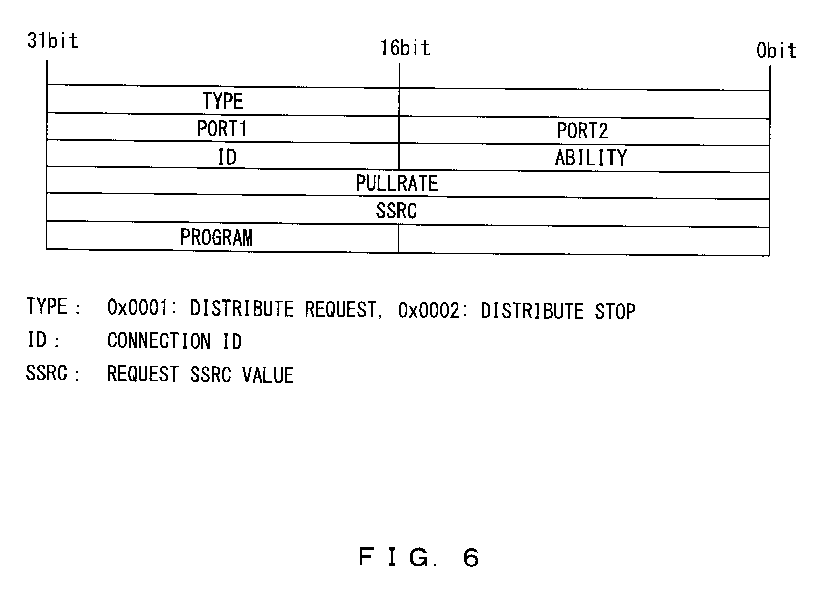

Firstly, a request packet for requesting the start of distribution is transmitted to an IP (Internet protocol) address specified by a user. As described earlier, this operation is executed by the request packet generation unit 101 and the request packet transmitting unit 102 illustrated in FIG. 2. FIG. 6 is a data structure example of the request packet of the first preferred embodiment of receiving and transmitting devices. "TYPE" information sends a distribute request and distribute stop request when its value is "0x0001" and "0x0002", respectively. "PORT1" information and "PORT2" information specify the TCP/IP port numbers, respectively, of transmission/reception application. "ID" information specifies the identifier of a connection. "ABILITY" information specifies a value indicating transmission ability. "PULLRATE" information specifies the quality information (sample rate) of an image signal or file to be transmitted. "SSRC" information is a value required to identify session. "PROGRAM" information specifies a broadcast program. In step S301, a value indicating a distribute request "0x0001" is specified as "TYPE" information.

Then, when a request response packet is received after waiting for the request response packet from the transmitting device 200 whose IP address is specified for 30 seconds (repetition of steps S301→S302→S301), it is determined which is specified in the request response packet as device type information, a real-time encoder or a distribution server (step S303). Real-time and server modes are switched between on the basis of this determination result (step S304). The above operations are performed by the request response packet receiving unit 103, the request response analysis unit 104, and the mode determination unit 105 illustrated in FIG. 2, as described earlier.

Then, when a real-time mode is set, data is received on the basis of PCR control (step S305-S301). In this operation, as described earlier, the motion image decoding unit 116 receives an image signal received in real time via the data packet receiving unit 109, the packet determination unit 110, and the packet receiving buffer 111. In this case, the motion image decoding unit 116 performs decoding/reproduction operations according to a synchronous clock generated via the PCR generation unit 206 and the VCXO 113.

However, when a server mode is set, data is received on the basis of flow control (step S305-S307). In this operation, as described earlier, the motion image decoding unit 116 receives an image signal received in real time via the data packet receiving unit 109, the packet determination unit 110, and the packet receiving buffer 111. In this case, the motion image decoding unit 116 performs decoding/reproduction operations according to a system time clock generated by the self-running OSC 114.

In this case, the flow control unit 106 illustrated in FIG. 2 sequentially checks the packet receiving buffer 111 (step SS308), and if there is no abnormality in the state in which packets remain in the packet receiving buffer 111, it continues to receive data without performing any processes (step S308-S307).

However, as described earlier, when packets remaining in the packet receiving buffer 111 seem to exceed its buffer size (buffer over), the flow control unit 106 issues a first instruction to the transmit stop/start request packet transmitting unit 107. Upon receipt of this, the transmit stop/start request packet transmitting unit 107 generates a transmit stop request packet for the transmitting device 200 (FIG. 3) whose IP address is specified and transmits this packet to the network via the request packet transmitting unit 108 illustrated in FIG. 2 (step S308→S309). As a result, in the transmitting device 200, the transmission of data packets storing an image file is stopped and the amount of packets received by the receiving device 100 is adjusted.

Conversely, as described earlier, when no packets seem to remain in the packet receiving buffer 111 (buffer empty), the flow control unit 106 issues a second instruction to the transmit stop/start request packet transmitting unit 107. Upon receipt of this, the transmit stop/start request packet transmitting unit 107 generates a transmit start request packet for the transmitting device 200 whose IP address is specified and transmits this packet to the network via the request packet transmitting unit 108 (step S308→S310). As a result, in the transmitting device 200, the transmission of data packets storing an image file is started (re-started) and the amount of packets received by the receiving device 100 is adjusted.

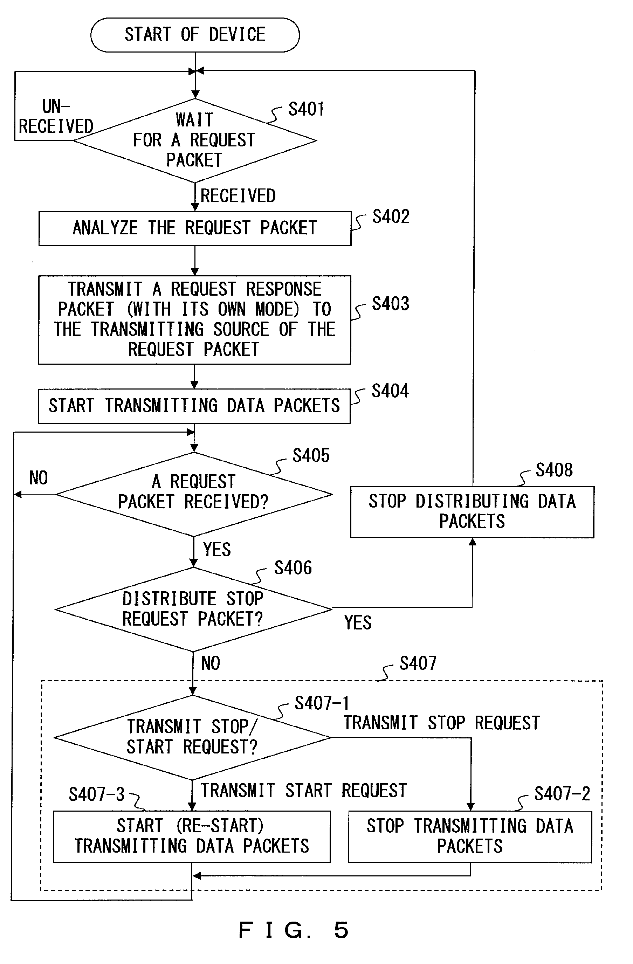

FIG. 5 is an operational flowchart illustrating the control operation of the transmitting device 200 illustrated in FIG. 3. The control operation of this flowchart can be realized as an operation for a processor, which is not illustrated, in the transmitting device 200 so as to execute a control program stored in memory, which is not illustrated.

Firstly, the transmitting device 200 is in a state of waiting for a request packet (repetition of the determination in step S401).
When the request packet is received, the contents of the request packet are analyzed (step S402). As described earlier, this operation is performed by the request packet receiving unit 202 and the request packet analysis unit 202 illustrated in FIG. 3.

When the request packet requests the start of the distribution of an image signal or file as a result of the above analysis, a request response packet is transmitted toward the receiving device 100 (FIG. 2) having an IP address to which the request packet is transmitted (step S403). In this case, if the receiving device's 100 own device is a real-time image distribution device, device type information indicating that it is a real-time encoder is attached to the request response packet. Conversely, if the receiving device's 100 own device is a file distribution server, device type information indicating that it is a distribution server is attached to the request response packet.

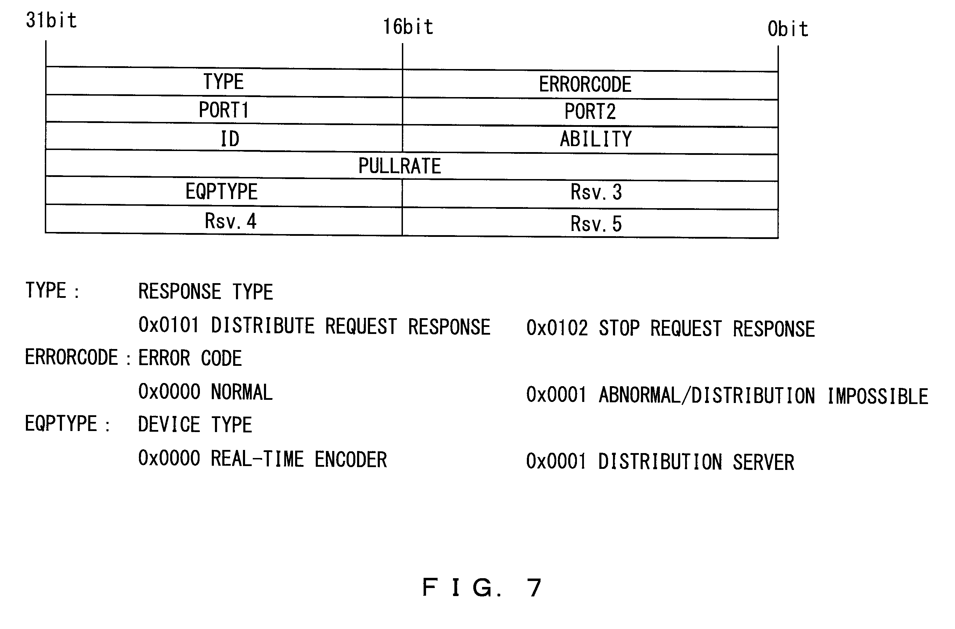

FIG. 7 is a data structure example of the request response packet of the first preferred embodiment of receiving and transmitting devices. Each piece of information "PORT1", "PORT2", "ID", "ABILITY" and "PULLRATE" is the same as a piece of information attached to a request packet (see FIG. 6). "TYPE" information specifies a response value "0x0101" to a distribute request or a response value "0x0102" to a stop request. "ERRORCODE" information specifies a value "0x0000" indicating a normal state or a value "0x0001" indicating an abnormal/distribution impossible state. "EQPTYPE" information specifies a value "0x0000" indicating a real-time encoder or a value "0x0001" indicating a distribution server as a device type. The transmitting device 200 (FIG. 3) can report the device type of its own device by this piece of "EQPTYPE" information in response to a request packet from the receiving device 100 (FIG. 2). Then, the receiving device 100 can switch the operation of its own device between real-time and server modes, according to this piece of information. In FIG. 7, respective pieces of information "Rsv. 3", "Rsv. 4" and "Rsv. 5" are reserved for a future purpose.

Then, the transmission start of data packets is instructed from the request packet analysis unit 202 to the motion image transmitting unit 204 (step S404). After this step, the transmission of data packets is continued while it is determined whether a request packet is received (repetition of determination in step S405). As described earlier, the transmitting operation of data packets is performed by the motion image transmitting unit 204, the packet transmitting buffer 207, and the data packet transmitting unit 208 illustrated in FIG. 3, and the receiving operation of data packets is performed by the request packet receiving unit 201 illustrated in FIG. 3.

When a request packet is received in the above-described transmitting operation, the contents of the request packet are analyzed and determined (steps S405→S406→S407). This operation is performed by the request packet receiving unit 201 and the request packet analysis unit 202 illustrated in FIG. 3.

If it is determined that the request packet is a distribute stop request packet, the stoppage of a distribution operation is instructed from the request packet analysis unit 202 to the motion image transmitting unit 204 illustrated in FIG. 3 and the process returns to a distribute start request packet waiting process (steps S406→S408→S401).

If it is determined that the request packet is not a distribute stop request packet, and also that the request packet's own device is a real-time image distribution device, step S407 is not performed and the process returns to the determination process in step S405.

If it is determined that the request packet is not a distribute stop request packet, and also that the request packet's own device is a file distribution server, the flow control process in step S407 is performed. Specifically, firstly it is determined whether the request packet is a transmit stop request packet or a transmit start request packet (step S407-1). If a transmit stop request packet is received, the stoppage of the transmission of data packets is instructed from the request packet analysis unit 202 to the packet transmitting buffer 207, both of which are illustrated in FIG. 3 (steps S407-1→S407-2). Then, the process returns to the determination process in step S405.

If a transmit start request packet is received, the start (re-start) of transmission of data packets is instructed from the request packet analysis unit 202 to the packet transmitting buffer 207 (steps S407-1→S407-3). Then, the process returns to the determination process in step S405. Thus, flow control is exercised.

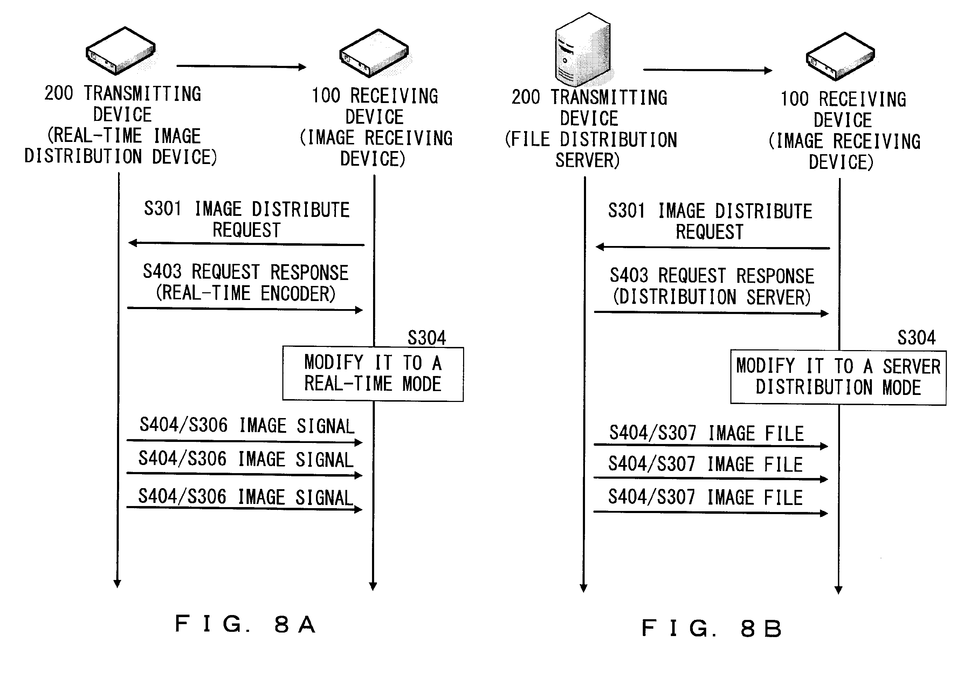

The above operations of the first preferred embodiment of receiving and transmitting devices are summarized in the operational sequence charts illustrated in FIGs. 8A and 8B.

If the transmitting device's 200 own device is a real-time image distribution device, as illustrated in FIG. 8A, the transmitting device 200 returns a request response to which information about the real-time encoder is attached (step S403 in FIG. 5) to an image distribute request from the receiving device 100 (step S301 in FIG. 4). In response to this, the receiving device 100 modifies the state of its own device to a real-time mode (step S304 in FIG. 4). Then, real-time image signals are transmitted from the transmitting device 200 to the receiving device 100 (step S404 in FIG. 4, step S306 in FIG. 4).

If the transmitting device's 200 own device is a file distribution server, as illustrated in FIG. 8B, the transmitting device 200 returns a request response to which information about the distribution server is attached (step S403 in FIG. 5) to an image distribute request from the receiving device 100 (step S301 in FIG. 4). In response to this, the receiving device 100 modifies the state of its own device to a server mode (step S304 in FIG. 4). Then, image files are transmitted from the transmitting device 200 to the receiving device 100 (step S404 in FIG. 4, step S307 in FIG. 4).

Thus, according to the first preferred embodiment of receiving and transmitting devices, the transmitting device 200 can report the device type of its own device by "EQPTYPE" information in response to a distribute start request packet from the receiving device 100, and the receiving device can switch the operation of its own device between real-time and server modes, according to this piece of information.

Next, the second preferred embodiment of receiving and transmitting devices will be explained.
Firstly, the configuration of the second preferred embodiment of a receiving device is the same as that of the receiving device 100 in the first preferred embodiment, illustrated in FIG. 2.

However, in the receiving device 100, firstly the request packet generation unit 101 transmits a request packet in which the distribute request mode information of a real-time mode is set toward the transmitting device. When a request response packet in which the mode of a real-time encoder is set to indicate normality is returned from the transmitting device in response to this request packet, the receiving device operates in a real-time mode. When the request response packet in which the mode of a distribution server is set to indicate abnormality is sent from the transmitting devicce, the request packet generation unit 101 re-transmits a request packet in which the distribute request mode information of a server mode is set, toward the transmitting device. When a request response packet in which the mode of a distribution server is set to indicate normality is returned from the transmitting device in response to this request packet, the receiving device 100 operates in a server mode.

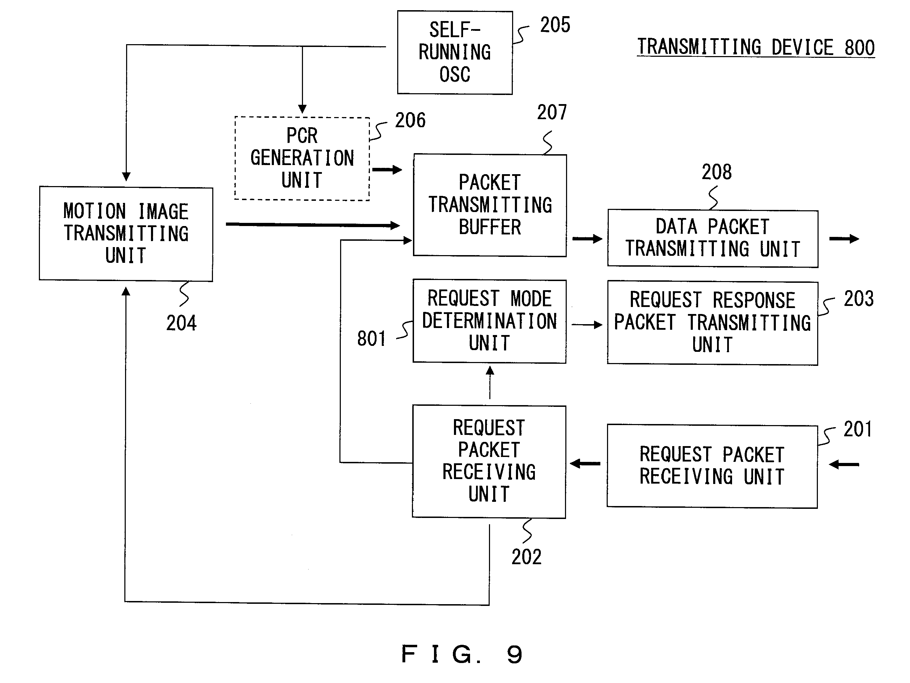

FIG. 9 is a configuration of a transmitting device 800 in the second preferred embodiment.
In FIG. 9, components to which the same reference numerals as in the configuration of the transmitting device 200 in the first preferred embodiment, illustrated in FIG. 3, are attached perform the same processes as in FIG. 3.

The configuration illustrated in FIG. 9 differs from that illustrated in FIG. 3 in that a request mode determination unit 801 determines which is set in a distribute start request packet received by the request packet analysis unit 202, a real-time mode or a server mode.

If a real-time mode is set in the distribute start request packet when its own device is a real-time image distribution device, the request mode determination unit 801 instructs the request response packet transmitting unit 203 to return a request response packet indicating normality. Conversely, if a server mode is set in the distribute start request packet, the request mode determination unit 801 instructs the request response packet transmitting unit 203 to return a request response packet indicating abnormality. Simultaneously, device type information indicating a real-time encoder is also attached to the request response packet.

If a real-time mode is set in the distribute start request packet when its own device is a file distribution server, the request mode determination unit 801 instructs the request response packet transmitting unit 203 to return a request response packet indicating abnormality. Conversely, if a server mode is set in the distribute start request packet, the request mode determination unit 801 instructs the request response packet transmitting unit 203 to return a request response packet indicating normality. Simultaneously, device type information indicating a distribution server is also attached to the request response packet.

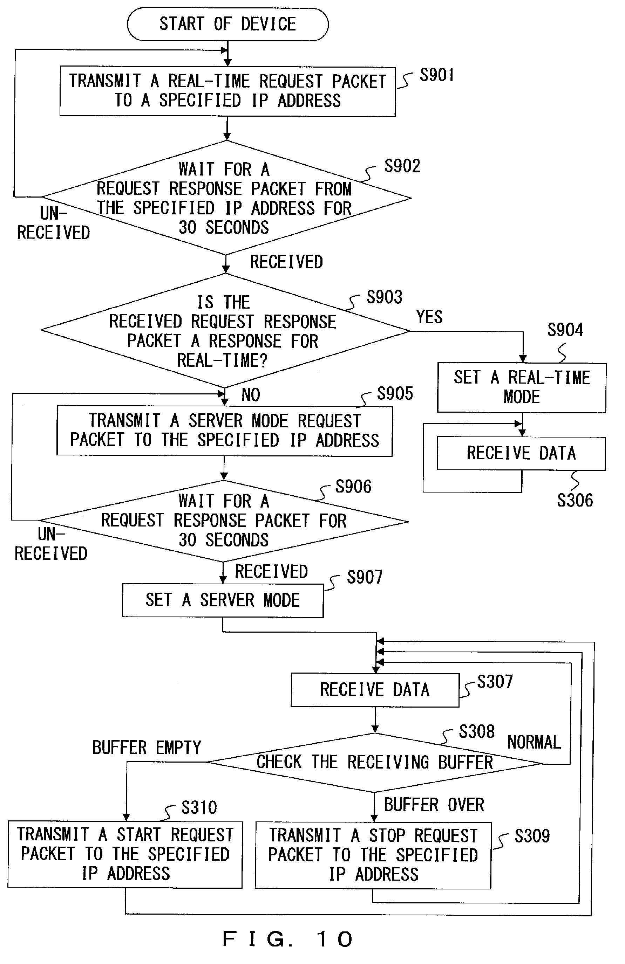

FIG. 10 is an operational flowchart illustrating the control operation of the receiving device 100 in the second preferred embodiment, illustrated in FIG. 2. The control operation in this operational flowchart is realized as an operation for a processor, which is not illustrated, in the receiving device 100 so as to execute a control program stored in memory, which is not illustrated.
Firstly, a request packet for requesting the start of distribution is transmitted to an IP (Internet protocol) address specified by a user (step S901). In this case, distribute request mode information indicating a real-time mode is attached to the request packet.

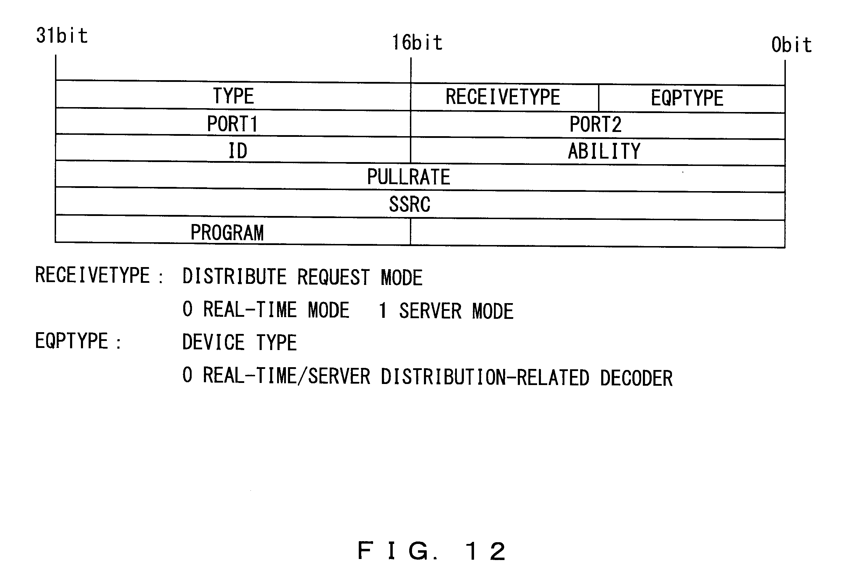

FIG. 12 is a data structure example of the request packet of the second preferred embodiment of receiving and transmitting devices. Respective pieces of information "TYPE", "PORT1", "PORT2", "ID", "ABILITY" and "PULLRATE" are the same as those in the data structure of a request packet in the first preferred embodiment illustrated in FIG. 6 (see FIG. 6). "RECEIVETYPE" information specifies the above-described distribute request mode information. "EQPTYPE" information indicates that it corresponds to both real-time distribution and server distribution by its value "0". In step S901, a value "0x0001" indicating a distribute request is specified as "TYPE" information and a value "0" indicating a real-time mode is specified as "RECEIVETYPE" information. This operation is performed by the request packet generation unit 101 1 and the request packet transmitting unit 102 illustrated in FIG. 2.

Then, when a request response packet is received from the transmitting device 200 whose IP address is specified after waiting for it for 30 seconds (repetition of steps S901→S902→S901), it is determined on the basis of the received request response packet whether the device type information of a real-time encoder is specified as a request response specified in the request response packet (step S903).

If this determination is YES, the mode determination unit 105 illustrated in FIG. 2 sets a real-time mode in the switching unit 115 and the flow control unit 106 (step S904). Thus, when a real-time mode is set, data is received on the basis of PCR control (step S306). This operation is the same as the operation in step S306 of the first preferred embodiment, illustrated in FIG. 4.

If the determination in step S903 is NO, the mode determination unit 105 notifies the request packet generation unit 101 of this fact. In response to this notice, the request packet generation unit 101 transmits a request packet requesting re-starting of the distribution to the specified IP address (step S905). In this case, a value "1" indicating a server mode is specified in the request packet as distribute request mode information, that is, "RECEIVETYPE" information.

Then, when a request response packet is received from the transmitting device 200 whose IP address is specified after waiting for it for 30 seconds (repetition of steps S905→S906→S905), the mode determination unit 105 illustrated in FIG. 2 sets a server mode in the switching unit 115 and the flow control unit 106 (step S907). When a server mode is set thus, data is received on the basis of flow control (steps S307 through S310). This operation is the same as the operation in steps S307 through S310 in the first preferred embodiment, illustrated in FIG. 4.

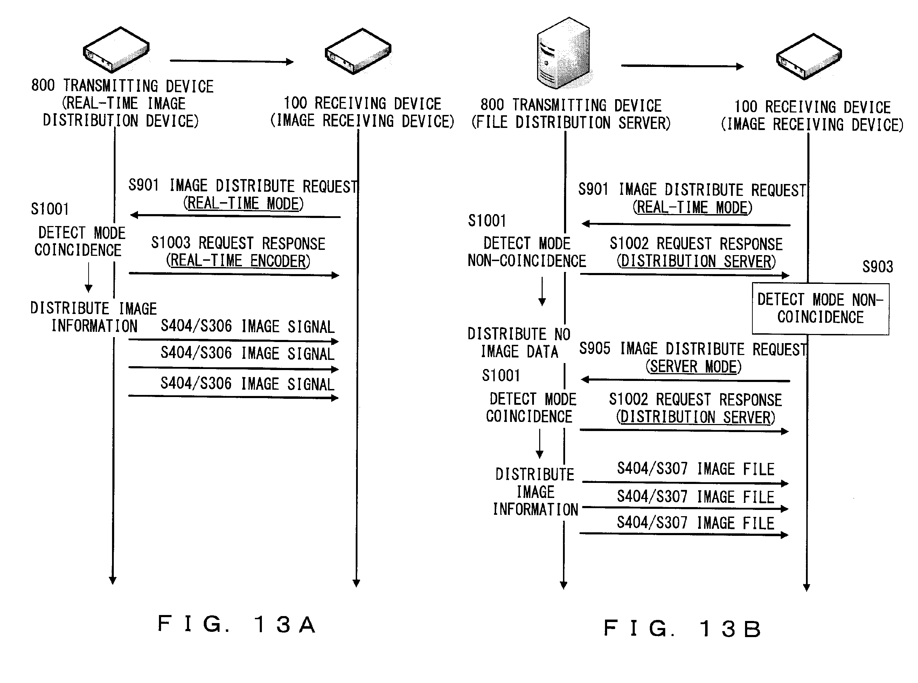

FIGs. 13A and 13B are the operational sequence charts of the transmitting device 800 illustrated in FIG. 9. The control operations of these operational flowcharts are realized as operations for a processor, which is not illustrated, in the transmitting device 800 so as to execute a control program stored in memory, which is not illustrated.
Firstly, the processes in steps S401 and S402 are the same as those in steps S401 and S402 in the first preferred embodiment, illustrated in FIG. 5.
Specifically, firstly, the transmitting device 800 is in a request packet waiting state (repetition of the determination in step S401).

When a request packet is received, the contents of the request packet are analyzed (step S4029). This operation is performed by the request packet receiving unit 201 and the request packet analysis unit 202 illustrated in FIG. 9.

When the request packet requests the start of the distribution of image signals or files as a result of the above analysis, it is determined whether distribute request mode information set in the request packet coincides with the mode of its own device (step S1001). This operation is performed by the request mode determination unit 801 illustrated in FIG. 9.
When a distribute start request packet is received the first time, a value "0" indicating a real time mode is specified in the request packet as "RECEIVETYPE" information in step S901 illustrated in FIG. 10. Therefore, if its own device is a real-time image distribution device, it is determined in step S1001 1 that they are matched and if its own device is a file distribution server, it is determined in step S1001 1 that they are not matched.

If its own device is a file distribution server, after the determination of non-coincidence in step S1001, the second distribute start request packet is received in step S905 illustrated in FIG. 10. In this case, a value "1" indicating a server mode is specified in the request packet as "RECEIVE TYPE" information in step S901 illustrated in FIG. 10. Therefore, it is determined in step S1001 1 that they are matched.

If its own device is a file distribution server and it is determined in step S1001 that they are matched when the first distribute start request packet is received, the following operation is performed. Specifically, the request mode determination unit 801 instructs the request response packet transmitting unit 203 to return a request response packet to which the device type information indicating abnormality and a distribution server (step S 1002) is attached. The data structure of the request response packet is the same as the data structure in the first preferred embodiment, illustrated in FIG. 7. In step S1002, a value "0x0101" indicating a distribute request response, a value "0x0001" " indicating abnormality and distribution impossible, and a value "0x0001" indicating a distribution server are specified as "TYPE", "ERRORCODE" and "EQPTYPE" information, respectively. Then, the process returns to a distribute start request packet waiting process (step S 1002→S401 1).

If its own device is a file distribution server and the second distribute start request packet is received or if its own device is a real-time image distribution device 1403 and the first distribute start request packet is received, it is determined in step S1001 1 that they are matched. In this case, the request mode determination unit 801 instructs the request response packet transmitting unit 203 to return a request response packet to which device type information indicating normality and its own mode is attached(a distribution server or real-time encoder) (step S1003). Specifically, in the data structure example illustrated in FIG. 7, a value "0x0101" indicating a distribute request response, a value "0x0001" indicating abnormality and distribution impossible, and a value "0x0001" indicating a distribution server (when its own device is a file distribution server) or "0x0000" indicating a real-time encoder (when its own device is a real-time image distribution device) are specified as "TYPE", "ERRORCODE" and "EQPTYPE" information, respectively.

Then, the start of transmission of data packets is instructed from the request packet analysis unit 202 to the motion image transmitting unit 204, both of which are illustrated in FIG. 3, and the transmission is started (step S404). Operations after this are the same as a series of control operations from steps S405 until S408 in the first preferred embodiment.
The above operations of the receiving and transmitting devices in the second preferred embodiment are summarized in the operational sequence charts illustrated in FIGs. 13A and 13B.

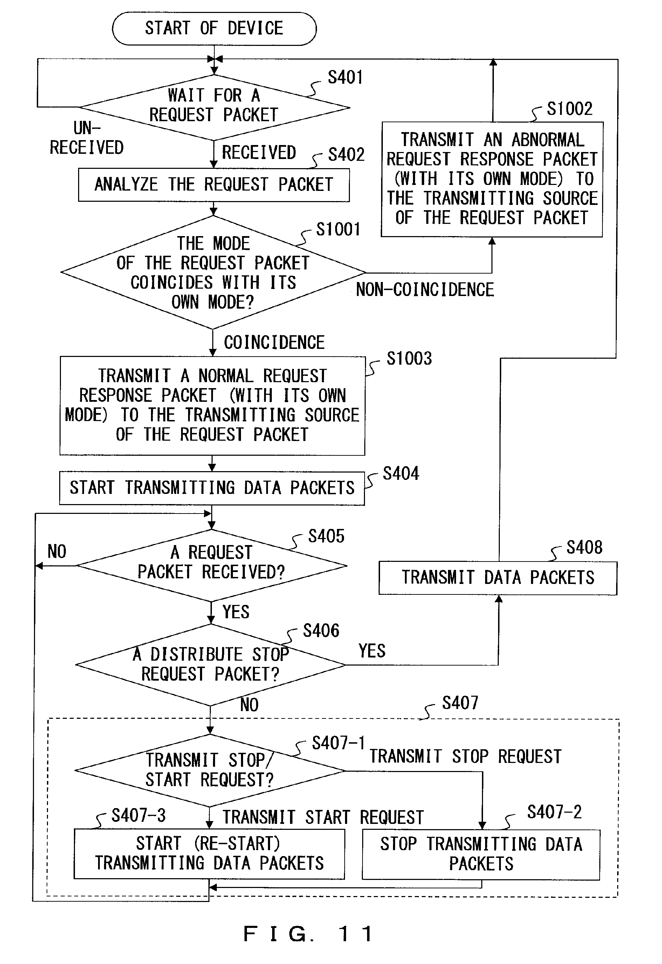

If its own deice is a real-time image distribution device, as illustrated in FIG. 13A, in the transmitting device 800, it is determined that their modes are matched (step S1001 illustrated in FIG. 11) in response to an image distribute request in which a real-time mode is specified, from the receiving device 100 (step S901 illustrated in FIG. 4). As a result, the transmitting device 800 returns a request response indicating abnormality, to which information indicating a distribution server is attached (step S1002 illustrated in FIG. 11). In response to this request response, the receiving device 100 detects mode non-coincidence (step S903 illustrated in FIG. 10) and transmits an image distribute request in which a server mode is specified (step S903 illustrated in FIG. 10). As a result, in the transmitting device 800, mode non-coincidence is determined (step S1001 illustrated in FIG. 11). Then, the transmitting device 800 returns a request response indicating normality including information indicating a distribution server (step S1003 illustrated in FIG. 11). In response to this, the receiving device 100 sets its own device in a server mode (step S907 illustrated in FIG. 10). Then, image files are transmitted from the transmitting device 800 to the receiving device 100 (step S404 illustrated in FIG. 11, step S307 illustrated in FIG. 10).

Thus, according to the second preferred embodiment of transmitting and receiving devices, a distribute request mode expected by the receiving device 100 can be explicitly reported from the receiving device 100 to the transmitting device 800 by "RECEIVETYPE" information.
Thus, according to the first or second preferred embodiment of receiving and transmitting devices, there is no need to prepare receiving devices dedicated for respective devices in an environment where a real-time image distribution device for monitoring and a file distribution server are mixed, thereby reducing costs.

Using a receiving device according to the above preferred embodiments, images can be received seamlessly without being aware of a distribution source.

Although in the respective preferred embodiments, explanations are given targeting image signals as an example, the disclosed technology is also applicable to various media signals other than image signals, such as voice signals and the like.

## Claims

1. A media distribution switching method for switching media information distributed from a transmitting to a receiving device on a packet network, comprising the steps of:
transmitting a request packet for requesting distributing of the media information from the transmitting to the receiving device;
returning from the transmitting device to the receiving device a request response packet to which device type information indicting whether the transmitting device is for real-time transmission or non-real-time transmission, is attached, in response to the request packet; and
performing a reception process by switching between an operation mode for real-time transmission and an operation mode for non-real-time transmission in the receiving device, according to device type information attached to the request response packet received from the transmitting device.

2. The media distribution switching method according to claim 1, wherein
when transmitting the request packet to the transmitting device, the receiving device attaches distribute request mode information for specifying a first operation mode expected by the receiving device to the request packet,
when the distribute request mode information attached to the request mode coincides with an operation mode of the transmitting device, the transmitting device returns the request response packet to which information indicating normality is attached and when the distribute request mode information attached to the request mode does not coincide with an operation mode of the transmitting device, the transmitting device returns the request response packet to which information indicating abnormality is attached,
when information indicating normality is attached to the request response packet received from the transmitting device, the receiving device performs a receiving operation in an operation mode corresponding to device type information attached to the request response packet and
when information indicating normality is attached to the request response packet received from the transmitting device, the receiving device re-transmits a request packet to which distribute request mode information for specifying an operation mode different from the first operation mode is attached, to the transmitting device.

3. A receiving device for receiving media information transmitted from a transmitting device on a packet network, comprising:
request packet generation means for generating a request packet for requesting distribution of the media information;
request response packet receiving means for receiving a request response packet corresponding to the request packet from the transmitting device;
request response analysis means for analyzing a request response set in the request response packet;
mode determination means for switching between an operation mode for real-time transmission and an operation mode for non-real-time transmission, according to device type information attached to the request response, indicating whether the transmitting device is for real-time transmission or non-real-time transmission;
first receiving means for receiving the media information in an operation mode for non-real-time transmission; and
second receiving means for receiving the media information in an operation mode for real-time transmission.

4. A transmitting device for transmitting media information to a receiving device on a packet network, comprising:
request packet receiving means for receiving a request packet for requesting distribution of the media information from the receiving device;
request packet analysis means for analyzing a request set in the request packet; and
request response packet transmitting means for returning, to the receiving device in response to the request, a request response packet to which device type information indicating whether its own device is a real-time transmission or non-real-time transmission is attached.
